# EUROPEAN PATENT SPECIFICATION

(11) **EP 4 454 938 B1**
(45) Date of publication and mention of the grant of the patent: **14.10.2026**
(21) Application number: 22911738.7
(22) Date of filing: 13.12.2022
(51) Int. Cl.: B60L 58/30, B60L 3/00, H01M 8/04082, F17C 7/00, F17C 13/04

(54) **HYDROGEN SUPPLY DEVICE OF FUEL CELL VEHICLE AND METHOD OF CONTROLLING SAME**
WASSERSTOFFZUFUHRVORRICHTUNG FÜR EIN BRENNSTOFFZELLENFAHRZEUG UND VERFAHREN ZUR STEUERUNG DAVON
DISPOSITIF D'ALIMENTATION EN HYDROGÈNE DE VÉHICULE À PILE À COMBUSTIBLE ET SON PROCÉDÉ DE COMMANDE

(30) Priority: 23.12.2021 KR 20210186070
(43) Date of publication of application: 30.10.2024
(73) Proprietor: Iljin Hysolus Co., Ltd., Jeollabuk-do 55322 (KR)
(72) Inventor: YIM, Jun Young, Wanju-gun, Jeollabuk-do 55322 (KR); LEE, Seok Jin, Wanju-gun, Jeollabuk-do 55322 (KR)
(74) Representative: Zacco Sweden AB
(86) International application number: PCT/KR2022/020179
(87) International publication number: WO 2023/121105

(56) References cited:
- EP-B1- 1 800 930
- JP-A- 2008 243 563
- KR-A- 20050 016 176
- KR-A- 20120 115 104
- KR-A- 20210 115 850
- KR-B1- 101 470 205
- US-A1- 2008 245 437
- US-A1- 2010 193 045
- US-A1- 2012 255 621
- US-B2- 7 484 521

## Description

### [Technical Field]

The present invention relates to a hydrogen supply device for a fuel cell vehicle and a method of controlling the same, and more specifically, to initial drive stabilization upon starting a fuel cell vehicle.

### [Background Art]

**In** general, a fuel cell system applied to a hydrogen fuel cell vehicle, which is one eco-friendly future vehicle, is a device for generating electrical energy by chemically reacting oxygen in the air with externally supplied hydrogen.

Such a fuel cell system includes a fuel cell stack for generating electrical energy from the electrochemical reaction of reaction gases, a hydrogen supply device for supplying hydrogen as a fuel to the fuel cell stack, an air supply device for supplying air containing oxygen that is an oxidizing agent necessary for the electrochemical reaction in the fuel cell stack, a heat and water management system for emitting heat, which is a by-product of the electrochemical reaction of the fuel cell stack, to the outside to optimally control an operating temperature of the fuel cell stack and performing a water management function, and a fuel cell system controller for controlling an overall operation of the fuel cell system.

**In** general, the hydrogen supply device adjusts a pressure of high-pressure hydrogen in a hydrogen vessel in two stages while the high-pressure hydrogen passes through a high-pressure regulator and a low-pressure regulator and then supplies the adjusted high-pressure hydrogen to the fuel cell stack (anode). For example, high-pressure hydrogen of 350 bar or 700 bar supplied from the hydrogen vessel flows into the low-pressure regulator at a pressure of about 6 to 20 bar through the high-pressure regulator, the pressure is lowered to about 0.1 to 1 bar in the low-pressure regulator, and hydrogen of the lowered pressure is supplied to the fuel cell stack.

Examples of prior art are disclosed in US 2012/255621 A1 and in US 2010/193045 A1.

The background technology of the present invention is disclosed in Korean Patent No. 10-1113652 (published on September 15, 2012 and entitled "HYDROGEN SUPPLY METHOD FOR FUEL CELL SYSTEM").

### [Disclosure]

### [Technical Problem]

When a vehicle turns on and a system initially starts, such a hydrogen supply device supplies hydrogen to a fuel cell by opening a valve of a hydrogen vessel without a separate waiting time.

In this case, in the case of a plurality of hydrogen vessels of the hydrogen supply device, although a temperature difference between vessels occurs according to vehicle conditions and a location of the hydrogen vessel when a hydrogen fuel cell vehicle travels actually, the same pressure is generated based one the temperature difference.

However, when the traveling is ended, the valve of the hydrogen vessel is closed and thus hydrogen in each vessel may not move. Therefore, when the hydrogen supply device is not operated for a long time, constant temperatures of the vessels are maintained, but pressures of the vessels are differently set according to a temperature deviation.

Upon receiving a start-on signal in a state in which the pressures of the vessels are differently set as described above, the hydrogen supply device supplies hydrogen by opening the vessel valve, and at this time, there is a problem that hydrogen is charged from a high-pressure vessel to a low-pressure vessel when the pressure difference between the vessels is great, or when an excess flow valve (EFV) of the vessel valve is operated, supply failure of hydrogen supplied to the fuel cell occurs, resulting in a problem in traveling.

The present invention has been made in efforts to solve the above problems and is intended to provide a hydrogen supply device for a fuel cell vehicle, which detects and stabilizes a pressure change caused by a pressure difference between vessels by performing an initial driving sequence upon starting a fuel cell vehicle and then supplies hydrogen to a fuel cell, and a method of controlling the same.

### [Technical Solution]

A hydrogen supply device for a fuel cell vehicle according to one aspect of the present invention includes a vessel valve mounted on each of a plurality of hydrogen vessels to supply and block hydrogen, a manifold connected to the plurality of hydrogen vessels through a supply pipe, a regulator connected to the manifold to lower a high pressure of hydrogen to a pressure required for a fuel cell and supply the hydrogen of the lowered pressure, a supply valve installed on the supply pipe between the manifold and the regulator to control hydrogen supply, a pressure sensor configured to detect a pressure of the manifold, and a controller configured to perform an initial driving sequence when a vehicle starts and then supply hydrogen by operating the vessel valve and the supply valve.

**In** the present invention, the controller may perform the initial driving sequence that repeatedly turns the vessel valve on and off for a first set time in an off state of the supply valve, then detect a change in pressure in the manifold through the pressure sensor, and when not detecting a change to a pressure that is a predetermined pressure or higher, supply hydrogen by operating the vessel valve and the supply valve.

**In** the present invention, the controller may detect the change in pressure in the manifold, when detecting the change to the pressure that is the predetermined pressure or higher, detect the change in pressure in the manifold after repeating the initial driving sequence, and supply hydrogen by operating the vessel valve and the supply valve.

**In** the present invention, when a start on signal is received and then a second set time has elapsed, the controller may supply hydrogen by operating the vessel valve and the supply valve.

**In** the present invention, when hydrogen is supplied by operating the vessel valve and the supply valve, the controller may output a supply signal to a peripheral control device.

A method of controlling a hydrogen supply device for a fuel cell vehicle according to another aspect of the present invention includes performing, by a controller, an initial driving sequence upon receiving a start on signal from a peripheral control device, detecting, by the controller, a change in pressure in a manifold after performing the initial driving sequence, when the controller detects the change in pressure in the manifold and the pressure is changed to a predetermined pressure or higher, returning to the performing of the initial driving sequence, and when the controller detects the change in pressure in the manifold and the pressure is not changed to the predetermined pressure or higher, supplying hydrogen by operating a vessel valve and a supply valve.

**In** the present invention, the performing of the initial driving sequence may include repeatedly turning, by the controller, the vessel valve on and off for a first set time in an off state of the supply valve.

**In** the present invention, the returning to the performing of the initial driving sequence may further include supplying, by the controller, hydrogen by operating the vessel valve and the supply valve when a second set time has elapsed after receiving the start on signal.

The method according to the present invention further includes outputting, by the controller, a supply signal to the peripheral control device when hydrogen is supplied by operating the vessel valve and the supply valve.

### [Advantageous Effects]

According to a hydrogen supply device for a fuel cell vehicle and a method of controlling the same according to one aspect of the present invention, by detecting and stabilizing a pressure change caused by a pressure difference between vessels by performing an initial driving sequence upon starting a fuel cell vehicle and then supplies hydrogen to a fuel cell, it is possible to prevent lack of a flow rate and a pressure drop phenomenon due to the pressure difference upon starting and stably start the fuel cell vehicle.

### [Description of Drawings]

FIG. 1 is a block configuration diagram showing a hydrogen supply device for a fuel cell vehicle according to one embodiment of the present invention.
FIG. 2 is an overall configuration diagram of the hydrogen supply device for a fuel cell vehicle according to one embodiment of the present invention.
FIG. 3 is a flowchart for describing a method of controlling the hydrogen supply device for a fuel cell vehicle according to one embodiment of the present invention.

### [Modes of the Invention]

Hereinafter, a hydrogen supply device for a fuel cell vehicle and a method of controlling the same according to the present invention will be described with reference to the accompanying drawings. In this process, thicknesses of lines, sizes of components, or the like illustrated in the drawings may be exaggerated for clarity and convenience of description. In addition, terms to be described below are the terms defined in consideration of functions in the present invention, which may be changed according to a user or operator's intention or custom. Therefore, the definition of these terms should be made based on the contents throughout the specification.

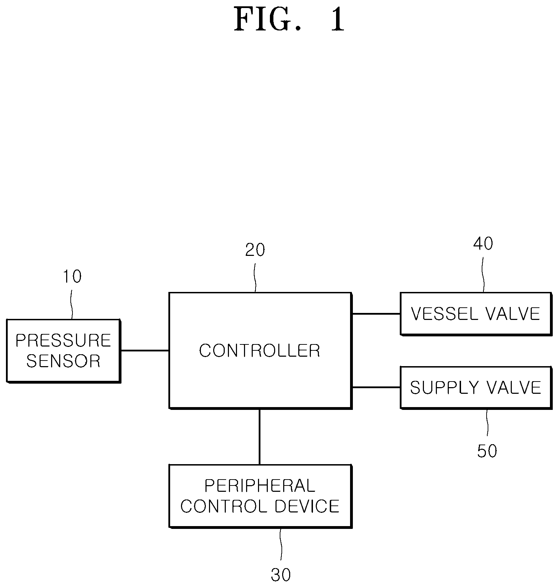

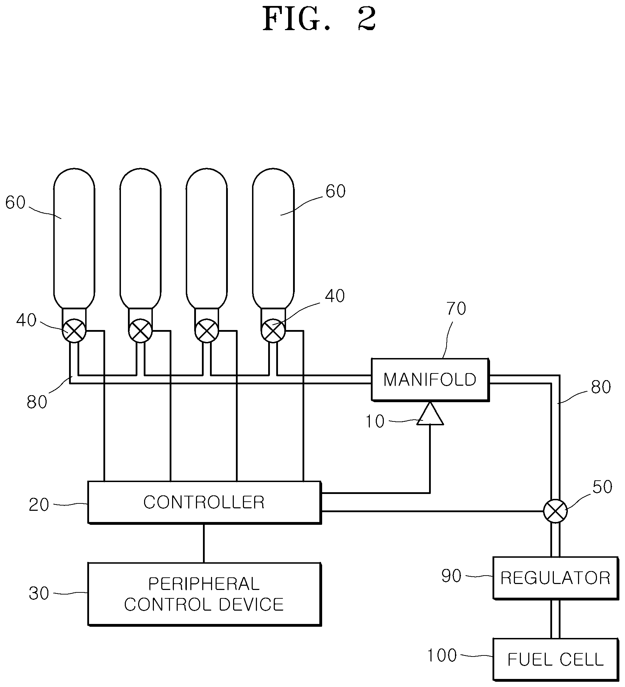

FIG. 1 is a block configuration diagram showing a hydrogen supply device for a fuel cell vehicle according to one embodiment of the present invention, and FIG. 2 is an overall configuration diagram of the hydrogen supply device for a fuel cell vehicle according to one embodiment of the present invention.

As shown in FIGS. 1 and 2, the hydrogen supply device for a fuel cell vehicle according to one embodiment of the present invention may include a vessel valve 40, a manifold 70, a regulator 90, a supply valve 50, a pressure sensor 10, and a controller 20.

The vessel valve 40 may be mounted on each of a plurality of hydrogen vessels 60 to supply and block hydrogen.

The manifold 70 may be connected to the plurality of hydrogen vessels 60 and a supply pipe 80 to supply hydrogen to one supply pipe 80.

The regulator 90 may be connected to the manifold 70 to lower a high pressure of hydrogen to a pressure required for a fuel cell 100 and supply hydrogen of the lowered pressure.

For example, a high pressure of 350 bar or 700 bar of hydrogen supplied from the hydrogen vessel 60 may be lowered to a pressure of about 0.1 to 1 bar, and hydrogen of the lowered pressure is supplied to the stack of the fuel cell 100.

The supply valve 50 may be installed on the supply pipe 80 between the manifold 70 and the regulator 90 to control hydrogen supply while performing an initial driving sequence.

The pressure sensor 10 may detect a pressure of the manifold 70 and provide the detected pressure to the controller 20.

Upon receiving a start on signal from a peripheral control device 30 through in-vehicle communication, the controller 20 may supply hydrogen by performing the initial driving sequence and then operating the supply valve 50.

Here, the controller 20 may perform the initial driving sequence that repeatedly turns the vessel valve 50 on and off for a first set time in an off state of the supply valve 50 and then detect a change in pressure in the manifold 70 through the pressure sensor 50. When not detecting a change to a pressure that is a predetermined pressure or higher, the controller 20 may supply hydrogen by operating the vessel valve 40 and the supply valve 50.

However, when detecting the change in pressure in the manifold 70 and detecting the change to the pressure that is the predetermined pressure or higher, the controller 20 may detect the change in pressure in the manifold 70 after repeating the initial driving sequence and operate the vessel valve 40 and the supply valve 50 to supply hydrogen.

As described above, when the pressure is balanced after performing the initial driving sequence one time at the beginning of start and thus the change to the pressure that is the predetermined pressure or higher is not detected, hydrogen is supplied by operating the vessel valve 40 and the supply valve 50.

However, when detecting the change to the pressure that is the predetermined pressure or higher, the controller 20 repeats the initial driving sequence and then re-detects a change in pressure. When not detecting the change to the pressure that is the predetermined pressure or higher, the controller 20 supplies hydrogen by operating the vessel valve 40 and the supply valve 50.

Such a repetitive performance is repeated until a second set time has elapsed after the start on signal is input, and then the controller 20 may supply hydrogen by operating the vessel valve 40 and the supply valve 50.

Then, when supply capacity is insufficient or start fails, the controller 20 may allow the peripheral control device 30 to output a warning or switch to a driving unavailability state.

Meanwhile, when hydrogen is supplied by operating the vessel valve 40 and the supply valve 50, the controller 20 may output a supply signal to the peripheral control device 30 and allow the peripheral control device 30 to perform a start on procedure.

Then, upon receiving a start off signal from the peripheral control device 30, the controller 20 may block the hydrogen supply by blocking the vessel valve 40 and the supply valve 50.

Meanwhile, the controller 20 may be an electronic control unit (ECU) for a vehicle and include a processor, a memory connected to the processor, etc.

As described above, according to the hydrogen supply device for a fuel cell vehicle according to the embodiment of the present invention, by detecting and stabilizing the change in pressure caused by the pressure difference between the vessels by performing the initial driving sequence upon starting the fuel cell vehicle and then supplies hydrogen to the fuel cell, it is possible to prevent lack of the flow rate and the pressure drop phenomenon due to the pressure difference upon starting and stably start the fuel cell vehicle.

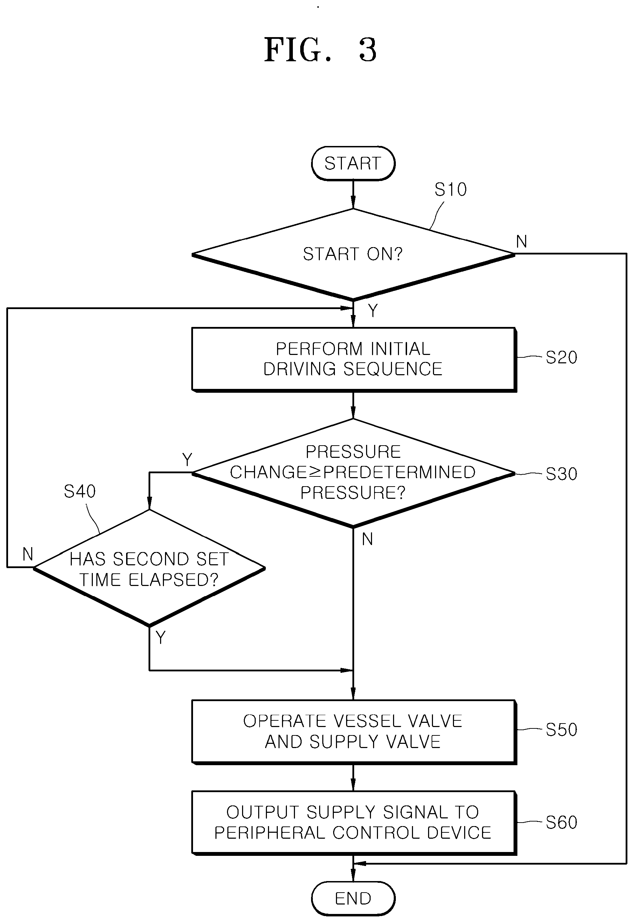

FIG. 3 is a flowchart for describing a method of controlling the hydrogen supply device for a fuel cell vehicle according to one embodiment of the present invention.

As shown in FIG. 3, the method of controlling the hydrogen supply device for a fuel cell vehicle according to the embodiment of the present invention first includes determining, by the controller 20, whether the start on signal is received from the peripheral control device 30 through in-vehicle communication (S10).

Upon receiving the start on signal in operation S10, the controller 20 performs the initial driving sequence (S20).

Here, the initial driving sequence is an operation of allowing the controller 20 to repeatedly turn the vessel valve 50 on and off for the first set time in the off state of the supply valve 50.

The pressure difference between the hydrogen vessels 60 occurring when the hydrogen supply device is not operated for a long time can be eliminated through such an initial driving sequence. **In** addition, the change in pressure can be quickly detected.

After performing the initial driving sequence in operation S20, the controller 20 detects a change in pressure in the manifold 70 (S30).

Here, the controller 20 may determine whether the pressure is changed to the predetermined pressure or higher.

When the pressure of the manifold 70 is detected in operation S30 and the pressure is changed to the predetermined pressure or higher, the controller 20 returns to operation S20 of performing the initial driving sequence and repeats the above process.

At this time, the controller 20 determines whether the second set time has elapsed after receiving the start on signal (S40).

When the second set time has not elapsed in operation S40, the controller 20 returns to operation S20 of performing the initial driving sequence.

Meanwhile, in operation S30, when the change in pressure in the manifold 70 is detected and the pressure is not changed to the predetermined pressure or higher, the controller 20 supplies hydrogen to the fuel cell 100 through the regulator 90 by operating the vessel valve 40 and the supply valve 50 (S50).

In addition, when it is determined that the second set time has elapsed after the start on signal is input in operation S40 and the second set time has elapsed, the controller 20 supplies hydrogen to the fuel cell 100 through the regulator 90 by operating the vessel valve 40 and the supply valve 50 (S50).

Such a repetitive performance of the initial driving sequence is repeated until the second set time has elapsed after the start on signal is input, and then the controller 20 may supply hydrogen by operating the vessel valve 40 and the supply valve 50.

Then, when supply capacity is insufficient or start fails, the controller 20 may allow the peripheral control device 30 to output a warning or switch to a driving unavailability state.

When hydrogen is supplied by operating the vessel valve 40 and the supply valve 50 in operation S50, the controller 20 outputs the supply signal to the peripheral control device 30 through in-vehicle communication and allows the peripheral control device 30 to perform the start procedure (S60).

Then, upon receiving the start off signal from the peripheral control device 30, the controller 20 blocks the hydrogen supply by blocking the vessel valve 40 and the supply valve 50.

As described above, according to the method of controlling the hydrogen supply device for a fuel cell vehicle according to the embodiment of the present invention, by detecting and stabilizing the change in pressure caused by the pressure difference between the vessels by performing the initial driving sequence upon starting the fuel cell vehicle and then supplies hydrogen to the fuel cell, it is possible to prevent lack of the flow rate and the pressure drop phenomenon due to the pressure difference upon starting and stably start the fuel cell vehicle.

The implementation described in the present specification may be implemented, for example, as a method or process, device, a software program, a data stream, or a signal. Although the context of the implementation of a single form (e.g., only a method is described) is only described, the implementations of the described features may also be implemented in other forms (e.g., devices or programs). The device may be implemented with appropriate hardware, software, firmware, etc. The method may be implemented using a device such as a processor, which is generally referred to as a processing device including, for example, a computer, a microprocessor, an integrated circuit, a programmable logic device, etc.

Therefore, the true technical scope of the present invention should be determined by the appended claims.

## Claims

1. A hydrogen supply device for a fuel cell vehicle, comprising:
a plurality of vessel valves (40) mounted on each of a plurality of hydrogen vessels (60) to supply and block hydrogen;
a manifold (70) connected to the plurality of hydrogen vessels (60) through a supply pipe (80);
a regulator (90) connected to the manifold (70) to lower a high pressure of hydrogen to a pressure required for a fuel cell and supply the hydrogen of the lowered pressure;
a supply valve (50) installed on the supply pipe (80) between the manifold (70) and the regulator (90) to control hydrogen supply;
a pressure sensor (10) configured to detect a pressure of the manifold (70); and
a controller (20) configured to perform an initial driving sequence when a vehicle starts and then supply hydrogen by operating the vessel valves (40) and the supply valve (50), **characterized by**
the controller (20) performs the initial driving sequence that repeatedly turns the vessel valves (40) on and off for a first set time in an off state of the supply valve (50),
wherein the controller (20) detects a change in pressure in the manifold (70) through the pressure sensor (10) after performing the initial driving sequence, and when not detecting a change to a pressure that is a predetermined pressure or higher, supplies hydrogen by operating the vessel valves (40) and the supply valve (50).

2. The hydrogen supply device of claim 1, wherein the controller (20) detects the change in pressure in the manifold, when detecting the change to the pressure that is the predetermined pressure or higher, detects a change in pressure in the manifold (70) after repeating the initial driving sequence, and supplies hydrogen by operating the vessel valves (40) and the supply valve (50).

3. The hydrogen supply device of claim 2, wherein, when the vehicle starts and then a second set time has elapsed, the controller (20) supplies hydrogen by operating the vessel valves (40) and the supply valve (50).

4. The hydrogen supply device of claim 1, wherein, when hydrogen is supplied by operating the vessel valves (40) and the supply valve (50), the controller (20) outputs a hydrogen supply signal to a peripheral control device (30).

5. A method of controlling a hydrogen supply device for a fuel cell vehicle, the method **characterized by** comprising:
performing, by a controller, an initial driving sequence upon receiving a start on signal from a peripheral control device (S20);
detecting, by the controller, a change in pressure in a manifold after performing the initial driving sequence (S30);
when the controller detects the change in pressure in the manifold and the pressure is changed to a predetermined pressure or higher, returning to the performing of the initial driving sequence (S20); and
when the controller detects the change in pressure in the manifold and the pressure is not changed to the predetermined pressure or higher, supplying hydrogen by operating a plurality of vessel valves and a supply valve (S50),
wherein the performing of the initial driving sequence includes repeatedly turning, by the controller, the vessel valves on and off for a first set time in an off state of the supply valve.

6. The method of claim 5, wherein the returning to the performing of the initial driving sequence further includes supplying, by the controller, hydrogen by operating the vessel valves and the supply valve when a second set time has elapsed after receiving the start on signal (S40).

7. The method of claim 5, further comprising outputting, by the controller, a supply signal to the peripheral control device when hydrogen is supplied by operating the vessel valves and the supply valve (S60).

## Patentansprüche

1. Wasserstoffversorgungsvorrichtung für ein Brennstoffzellenfahrzeug, umfassend:
eine Mehrzahl von Behälterventilen (40), die auf jeder einer Mehrzahl von Wasserstoffbehältern (60) montiert sind, um Wasserstoff zuzuführen und zu sperren;
einen Verteiler (70), der mit der Mehrzahl von Wasserstoffbehältern (60) über eine Versorgungsleitung (80) verbunden ist;
einen Regler (90), der mit dem Verteiler (70) verbunden ist, um einen hohen Wasserstoffdruck auf einen für eine Brennstoffzelle erforderlichen Druck zu senken und den Wasserstoff mit dem gesenkten Druck zuzuführen;
ein Versorgungsventil (50), das auf der Versorgungsleitung (80) zwischen dem Verteiler (70) und dem Regler (90) installiert ist, um die Wasserstoffzufuhr zu steuern;
einen Drucksensor (10), der dazu ausgelegt ist, einen Druck des Verteilers (70) zu erfassen; und
eine Steuerung (20), die dazu ausgelegt ist, eine Erstfahrsequenz durchzuführen, wenn ein Fahrzeug startet, und dann Wasserstoff durch Betätigung der Behälterventile (40) und des Versorgungsventils (50) zuzuführen, **dadurch gekennzeichnet, dass**
die Steuerung (20) die Erstfahrsequenz durchführt, die die Behälterventile (40) wiederholt für eine erste eingestellte Zeit in einem ausgeschalteten Zustand des Versorgungsventils (50) ein- und ausschaltet,
wobei die Steuerung (20) nach Durchführung der Erstfahrsequenz eine Druckänderung im Verteiler (70) über den Drucksensor (10) erfasst und wenn keine Änderung auf einen Druck, der einem vorbestimmten Druck oder höher entspricht, erfasst wird, Wasserstoff durch Betätigung der Behälterventile (40) und des Versorgungsventils (50) zuführt.

2. Wasserstoffversorgungsvorrichtung nach Anspruch 1, wobei die Steuerung (20) die Druckänderung im Verteiler erfasst, wenn sie eine Änderung auf den Druck erfasst, der dem vorbestimmten Druck entspricht oder ist, eine Druckänderung im Verteiler (70) nach Wiederholung der Erstfahrsequenz erfasst und Wasserstoff durch Betätigung der Behälterventile (40) und des Versorgungsventils (50) zuführt.

3. Wasserstoffversorgungsvorrichtung nach Anspruch 2, wobei, wenn das Fahrzeug startet und dann eine zweite eingestellte Zeit verstrichen ist, die Steuerung (20) Wasserstoff durch Betätigung der Behälterventile (40) und des Versorgungsventils (50) zuführt.

4. Wasserstoffversorgungsvorrichtung nach Anspruch 1, wobei, wenn Wasserstoff durch Betätigung der Behälterventile (40) und des Versorgungsventils (50) zugeführt wird, die Steuerung (20) ein Wasserstoffversorgungssignal an eine periphere Steuervorrichtung (30) ausgibt.

5. Verfahren zum Steuern einer Wasserstoffversorgungsvorrichtung für ein Brennstoffzellenfahrzeug, wobei das Verfahren **dadurch gekennzeichnet ist, dass** es umfasst:
Durchführen einer Erstfahrsequenz durch eine Steuerung beim Empfang eines Einschaltsignals von einer peripheren Steuervorrichtung (S20);
Erfassen einer Druckänderung in einem Verteiler durch die Steuerung nach Durchführung der Erstfahrsequenz (S30);
wenn die Steuerung die Druckänderung im Verteiler erfasst und der Druck auf einen vorbestimmten Druck oder höher geändert wird, Zurückkehren zur Durchführung der Erstfahrsequenz (S20); und
wenn die Steuerung die Druckänderung im Verteiler erfasst und der Druck nicht auf den vorbestimmten Druck oder höher geändert wird, Zuführen von Wasserstoff durch Betätigung einer Mehrzahl von Behälterventilen und eines Versorgungsventils (S50),
wobei das Durchführen der Erstfahrsequenz das wiederholte Ein- und Ausschalten der Behälterventile durch die Steuerung für eine erste eingestellte Zeit in einem ausgeschalteten Zustand des Versorgungsventils umfasst.

6. Verfahren nach Anspruch 5, wobei das Zurückkehren zur Durchführung der Erstfahrsequenz ferner das Zuführen von Wasserstoff durch die Steuerung durch Betätigung der Behälterventile und des Versorgungsventils umfasst, wenn eine zweite eingestellte Zeit nach Empfang des Einschaltsignals verstrichen ist (S40).

7. Verfahren nach Anspruch 5, ferner umfassend das Ausgeben eines Versorgungssignals durch die Steuerung an die periphere Steuervorrichtung, wenn Wasserstoff durch Betätigung der Behälterventile und des Versorgungsventils zugeführt wird (S60).

## Revendications

1. Dispositif d'alimentation en hydrogène pour un véhicule à pile à combustible, comprenant :
une pluralité de vannes de réservoir (40) montées sur chaque réservoir d'une pluralité de réservoirs d'hydrogène (60) pour fournir et bloquer de l'hydrogène ;
un collecteur (70) relié à la pluralité de réservoirs d'hydrogène (60) par l'intermédiaire d'un tuyau d'alimentation (80) ;
un détendeur (90) relié au collecteur (70) pour abaisser une haute pression d'hydrogène à une pression requise pour une pile à combustible et fournir l'hydrogène à la pression abaissée ;
une vanne d'alimentation (50) installée sur le tuyau d'alimentation (80) entre le collecteur (70) et le détendeur (90) pour commander l'alimentation en hydrogène ;
un capteur de pression (10) configuré pour détecter une pression du collecteur (70) ; et
un dispositif de commande (20) configuré pour effectuer une séquence de pilotage initiale lorsqu'un véhicule démarre et
fournir ensuite de l'hydrogène en actionnant les vannes de réservoir (40) et la vanne d'alimentation (50), **caractérisé en ce que**
le dispositif de commande (20) effectue la séquence de pilotage initiale qui ouvre et ferme de manière répétée les vannes de réservoir (40) pendant une première durée prédéfinie alors que la vanne d'alimentation (50) est à l'état fermé,
dans lequel le dispositif de commande (20) détecte un changement de pression dans le collecteur (70) par l'intermédiaire du capteur de pression (10) après avoir effectué la séquence de pilotage initiale, et, lorsqu'aucun changement vers une pression égale ou supérieure à une pression prédéterminée n'est détecté, fournit de l'hydrogène en actionnant les vannes de réservoir (40) et la vanne d'alimentation (50).

2. Dispositif d'alimentation en hydrogène selon la revendication 1, dans lequel le dispositif de commande (20) détecte le changement de pression dans le collecteur et, lors de la détection du changement vers la pression qui est égale ou supérieure à la pression prédéterminée, détecte un changement de pression dans le collecteur (70) après avoir répété la séquence de pilotage initiale, et fournit de l'hydrogène en actionnant les vannes de réservoir (40) et la vanne d'alimentation (50).

3. Dispositif d'alimentation en hydrogène selon la revendication 2, dans lequel, lorsque le véhicule démarre et qu'une seconde durée prédéfinie s'est ensuite écoulée, le dispositif de commande (20) fournit de l'hydrogène en actionnant les vannes de réservoir (40) et la vanne d'alimentation (50).

4. Dispositif d'alimentation en hydrogène selon la revendication 1, dans lequel, lorsque de l'hydrogène est fourni en actionnant les vannes de réservoir (40) et la vanne d'alimentation (50), le dispositif de commande (20) délivre en sortie un signal d'alimentation en hydrogène à un dispositif de commande périphérique (30).

5. Procédé de commande d'un dispositif d'alimentation en hydrogène pour un véhicule à pile à combustible, le procédé étant **caractérisé en ce qu'**il comprend les étapes consistant à :
effectuer, par un dispositif de commande, une séquence de pilotage initiale lors de la réception d'un signal de mise en marche en provenance d'un dispositif de commande périphérique (S20) ;
détecter, par le dispositif de commande, un changement de pression dans un collecteur après avoir effectué la séquence de pilotage initiale (S30) ;
lorsque le dispositif de commande détecte le changement de pression dans le collecteur et que la pression passe à une valeur égale ou supérieure à une pression prédéterminée, retourner à l'exécution de la séquence de pilotage initiale (S20) ; et
lorsque le dispositif de commande détecte le changement de pression dans le collecteur et que la pression ne passe pas à une valeur égale ou supérieure à la pression prédéterminée, fournir de l'hydrogène en actionnant une pluralité de vannes de réservoir et une vanne d'alimentation (S50),
dans lequel l'exécution de la séquence de pilotage initiale inclut l'ouverture et la fermeture répétées, par le dispositif de commande, des vannes de réservoir pendant une première durée prédéfinie alors que la vanne d'alimentation est à l'état fermé.

6. Procédé selon la revendication 5, dans lequel le retour à l'exécution de la séquence de pilotage initiale inclut en outre la fourniture, par le dispositif de commande, d'hydrogène en actionnant les vannes de réservoir et la vanne d'alimentation lorsqu'une seconde durée prédéfinie s'est écoulée après la réception du signal de mise en marche (S40).

7. Procédé selon la revendication 5, comprenant en outre la délivrance en sortie, par le dispositif de commande, d'un signal d'alimentation au dispositif de commande périphérique lorsque de l'hydrogène est fourni en actionnant les vannes de réservoir et la vanne d'alimentation (S60).
